# DEMANDE DE BREVET EUROPEEN

(11) **EP 1 036 975 A1**
(43) Date de publication de la demande: **20.09.2000**
(21) Numéro de dépôt: 99870050.4
(22) Date de dépôt: 18.03.1999
(51) Int. Cl.: F16L 58/10, C08K 3/26, C08K 5/57, C08K 13/02, C08L 27/06

(54) **Tuyau de cuivre pourvu d'une gaine de resine stabilisée**

(71) Demandeur: Boliden Cuivre & Zinc S.A., 4030 Liege (Grivegnee) (BE)
(72) Inventeur: Rogister, Joseph, 4610 Beyne-Heusay (BE)
(74) Mandataire: Van Malderen, Michel

(57) **Abrégé**

L' invention concerne des tubes de cuivre, en particulier des tubes de cuivre recuits destinés à la réalisation de conduits et qui sont pourvus d'une gaine réalisée en une résine à base de polychlorure de vinyle.

La composition de la gaine est à base de polychlorure de vinyle et comprend moins de 20% d'une charge du type craie présentant une granulométrie correspondant à : diamètre moyen de 0,5 à 5 µm, de préférence 1 à 5 µm, 98% de la matière ayant un diamètre inférieur à 20 µm, de préférence inférieur à 15 µm.

Un stabilisant thermique primaire qui est un sel organique d'étain à raison de 0,05 à 4% peut être présent ainsi que des costabilisants thermiques et d'autres matières tels que stabilisants. Les conduites peuvent être obtenues en déposant la couche de protection sur un tuyau en cuivre par extrusion continue sans soudure.

## Description

### Objet de l'invention

La présente invention concerne des tubes de cuivre, en particulier des tubes de cuivre recuits, destinés à la réalisation de conduites et pourvus d'une gaine réalisée en une résine à base de polychlorure de vinyle.

### Arrière-plan technologique

L'utilisation de tubes de cuivre pour des usages sanitaires et pour le chauffage est bien connue.

De manière générale, il est opportun pour diverses raisons de pourvoir ces tubes d'une gaine qui exerce notamment un effet isolant, pour éviter les déperditions de chaleur notamment, et qui sert également de protection.

On a fréquemment recours à des tubes de cuivre, notamment pour le chauffage de sol et pour d'autres usages. Ces tubes doivent être englobés dans du béton dont le contact avec le tube doit être évité pour des raisons évidentes de corrosion.

La présente invention s'adresse à ce type de produit.

Par le document DE 27 35 957 C2, on connaît de tels produits à base d'un tube métallique en cuivre extrudé, pourvu d'une gaine en PVC.

Le document EP 0 632 223 A1 décrit un type particulier de gaines extrudées au départ d'une matière thermoplastique de haute densité qui est pourvue de nervures saillant vers l'intérieur, servant d'espaces entre la gaine et le tube métallique.

Dans le document BE 802064, on décrit des produits similaires dans lesquels la matière formant la gaine se compose de 40 à 60 % de résine de polychlorure de vinyle, de 15 à 30 % de matière de charge, de 20 à 30 % d'ester d'acide phtalique agissant comme plastifiant et de 2 à 5 % de stabilisant au plomb.

Dans le document EP 0 732 533 A1 le but visé est de proposer des produits du type décrit, en recourant à une gaine ne contenant pas de métaux lourds préjudiciables à l'environnement, tels que des additifs à base de plomb ou de cadmium et dont la stabilité thermique n'est pas modifiée de manière sensible. Ce but est atteint en utilisant un mélange de résine constitué par 20 à 40 % de matière de charge, 20 à 30 % d'un phtalate à longue chaîne ramifiée, 1 à 3 % d'un stabilisant exempt de plomb et le solde étant constitué de polychlorure de vinyle en une proportion présentant au moins 35 % en poids.

Le seul stabilisant exempt de plomb qui est cité est un composé organique contenant du calcium et du zinc en une proportion comprise entre 3/1 et 30/1. Le phtalate présent selon le mémoire descriptif de ce document agit comme plastifiant et, selon les exemples, la présence d'autres constituants par exemple un plastifiant époxyde, du trioxYde d'antimoine servant d'agent anti-feu est également possible.

### Buts de l'invention

La présente invention vise à fournir une composition nouvelle et plus appropriée pour la gaine recouvrant des tubes à base de cuivre.

On a en effet observé, que pour des compositions comportant de 20 à 40 % de craie, telles que citées dans le document EP 0 732 533 A1, les propriétés mécaniques telles que la tension de rupture et l'allongement à la rupture sont moins favorables que pour des compositions comportant moins que 20 % de craie. Il est cependant connu que pour maîtriser le retrait de l'enveloppe, il est favorable de choisir une teneur plutôt élevée de craie. On vise donc selon l'invention de recourir à une composition optimisée qui permet de satisfaire les exigences de retrait avec une teneur faible en craie, tout en obtenant que la craie contenue dans la composition exerce un effet sur la brillance du produit obtenu qui présente habituellement un aspect terne et mat.

En outre, la stabilisation de la composition de l'enveloppe est optimisée en utilisant comme stabilisant un sel organique d'étain, des sels de calcium et de magnésium et des costabilisants organiques. L'efficacité de ce système de stabilisant permet une très bonne stabilité du coloris ce qui facilite le recyclage des déchets de fabrication et évite l'utilisation du Pb comme stabilisant.

### Éléments caractéristiques de l'invention

La présente invention se caractérise par le choix de la composition de l'enveloppe comme suit :

Comme charges, on utilise des charges qualifiées de charges du type craie qui sont du carbonate de calcium comme la craie, la calcite, la dolomite et le calcaire ainsi que leurs mélanges. La charge la plus fréquemment utilisée est la craie. Préférence est donnée à une charge de type craie avec un diamètre moyen de 0.5 à 5 µm et de préférence 1 à 5 µm, 98% de la matière ayant un diamètre inférieur à 20 µm et de préférence inférieur à 15µm. La teneur en charge du type de craie de la composition à base de polychlorure de vinyle est de 0 à 20%, de préférence de 0 à 15%.

Tous les sels organiques d'étain usuellement utilisé dans les compositions de polymères du chlorure de vinyle conviennent généralement à la réalisation des compositions selon l'invention. A titre d'exemple de pareils stabilisants primaires on peut cité les molécules répondant à la structure de base R2SnX2 ou le R peut être du méthyle, butyle, octyl ou un groupe ester acrylique compatible avec le PVC et le X peut être du lauréate, du maléate, du isooctyl mercaptoacetate et du 2-mercaptoethyloleate.

Comme stabilisant thermique primaire sel organique d'étain, on préfère utiliser le méthyl-, butyl- et l'octyl-étain isooctyl mercaptoacetate. La teneur du stabilisant thermique sels organiques d'étain est en général comprise entre 0.05 % et 4 % et de préférence entre 0.1 et 2 %.

Comme costabilisants, on peut utiliser les sels organiques de calcium tels que le stéarate et le hydroxystéarate, ainsi que les sels inorganiques et organiques de magnésium tels que l'oxyde de magnésium, le stéarate et le hydroxystéarate, ainsi que des costabilisants organiques tels que les dérivés époxy, les béta-dicétones, les polyols, les dérivés du pentaérythritol, les dérivés du type acétylacetonate métalliques, les dérivés allyles et carboxylés de la 1,4-dihydropyridine et leurs mélanges.

La composition comprend au moins 0,05 % de costabilisant, de préférence au moins 0.1 % de manière tout particulièrement préféré au moins 0.3 %. La composition à base de polychlorure de vinyle comprend en général une quantité inférieure ou égale à 5 %, de préférence inférieure à 3 % et de manière tout particulièrement inférieur à 1.5 % de costabilisant.

La composition à base de polychlorure de vinyle peut contenir un plastifiant. Tous les plastifiants usuellement utilisés dans les compositions de polychlorure de vinyle conviennent généralement à la réalisation des compositions selon l'invention. A titres d'exemple de pareils plastifiants, on peut citer des phtalates, les adipates, les azélates, les citrates, les ester d'alcools à chaînes droites, les phosphates et leurs mélanges. La dose de plastifiant comprend au moins 15% de plastifiant, et de préférence entre 20 et 40 % de plastifiant.

Par polychlorure de vinyle, on entend désigner, aussi bien les homopolymères du chlorure de vinyle que ces copolymères contenant des unités monomériques dérivées d'un ou de plusieurs comonomères. De préférence, les compositions suivant l'invention sont à base d'homopolymères du chlorure de vinyle.

Comme autres additifs, on peut citer les agents facilitant la mise en oeuvre, les retardeurs de flamme des pigments des fongicides, des lubrifiants. Ces ingrédients sont présents dans les concentrations usuelles.

L'invention concerne également un procédé pour l'obtention des conduits selon l'invention. Le procédé selon l'invention consiste à déposer la couche de protection sur le tube métallique par la technique d'extrusion continue sans soudure.

### Avantages de l'invention

L'invention a de multiples avantages. En particulier, elle assure la protection des tubes métalliques qui sont disposés de manière apparente vis-à-vis d'agents extérieurs responsables de l'apparition de corrosion tels que l'oxygène, l'air, l'humidité ambiante et les agents chimiques utilisés à proximités (produits d'entretien par exemple). La couche de matière plastique assure également la protection du tuyau en cuivre, par exemple dans les chapes en béton, qui, en son absence se corrodent rapidement. L'épaisseur de la couche de matière plastique est telle qu'elle protège par ailleurs très efficacement le tuyau en cuivre de tout type de griffures.

La couche de matière plastique se caractérise avantageusement par un aspect de surface plus brillant, des propriétés mécaniques, tels que les propriétés en traction comme la tension à la rupture et l'allongement à la rupture, améliorées et une densité plus faible par rapport aux couches de protection connues de l'art antérieur. La couche de matière plastique présente également l'avantage de ne pas porter atteinte à l'environnement.

Ces conduits sont habituellement utilisés pour les circuits d'eau chaude ou d'eau froide dans les habitations. En particulier, ils sont utilisés pour les installations sanitaires ou pour les circuits d'eau des systèmes de chauffage.

### Exemples

Les exemples qui suivent sont destinés à illustrer la présente invention sans toutefois en limiter la portée. Dans l'exemple comparatif, l'exemple comparatif 1, la composition à base de polychlorure de vinyle est conforme à l'état de la technique.

Les exemples qui suivent ont été réalisés en utilisant comme polymère, un polychlorure de vinyle obtenu par polymérisation en suspension aqueuse et caractérisée par un nombre K de 68 selon la norme DIN 53726.

Dans un mélangeur rapide, on prépare, à une température de l'ordre de 100°C, un mélange des composants indiqués au tableau 1, en respectant les pourcentages indiqués. L'ensemble de la composition est ensuite gélifié dans une extrudeuse et les joncs extrudés sont ensuite granulés à la sortie de l'extrudeuse et les granulés sont refroidis.

Pour déposer la couche de protection sur les tubes, les granules obtenus sont extrudés sur les tubes en cuivre dans une extrudeuse monovis à une température de 180°C.

La densité, la brillance et les propriétés en traction sont mesurées sur la couche de protection préparée selon la procédure décrite ci-dessus.

**Tableau 1.**

| Composition (en % poids) | Exemple 1 | Exemple 2 |
|---|---|---|
| Polychlorure de vinyle | 53.9 | **65.7** |
| Plastifiant | 22.7 | **26.3** |
| Craie | 20.2 | **6.6** |
| Sulfate tribasique de Pb | 2.8 | **-** |
| Stabilisant Sn (1) | - | **0.6** |
| Costabilisant | 0.2 | **0.6** |
| Lubrifiants | 0.2 | **0.2** |
| Brillance | 5 | 15 |
| Densité | 1.47 g /ml | 1.30 g/ml |
| Stabilité thermique | 70 min | 70 min |
| Tension à la rupture | 20 MPa | |
| Allongement à la rupture | 180 % | |

Évolution du coloris (indice de jaune) après malaxage sur malaxeur à cylindre à 200°C :

| | Exemple 1 | Exemple 2 |
|---|---|---|
| Indice de jaune initial 0 min | 39.5 | 38.1 |
| Après 1 min de malaxage | 39.7 | 38.3 |
| Après 5 min de malaxage | 40.8 | 38.5 |
| Après 10 min de malaxage | 41.2 | 37.8 |
| Après 15 min de malaxage | 41.9 | 38.7 |
| Après 20 min de malaxage | 42.8 | 39.8 |
| Après 25 min de malaxage | 43.5 | 40.2 |

Comme le montre le tableau 1, la composition de l'exemple 2 donne lieu à un aspect de surface plus brillant, une densité plus faible et des propriétés mécaniques également améliorées.

(1) Le stabilisant : sel organique d'étain dans l'exemple contient 18 % de Sn.

Dans le présent mémoire, les pourcentages indiqués sont des pourcentages en poids.

## Revendications

1. Conduits formés d'un tuyau de cuivre recouvert d'une couche de protection constituée d'une composition à base de polychlorure de vinyle comprenant moins de 20% d'une charge du type craie présentant une granulométrie correspondant à : diamètre moyen de 0,5 à 5 µm, de préférence 1 à 5 µm, 98% de la matière ayant un diamètre inférieur à 20 µm, de préférence inférieur à 15 µm.

2. Conduits selon l'une quelconque des revendications 1, caractérisés en ce que le stabilisant thermique primaire est un sel organique d'étain à raison de 0,05 à 4%.

3. Conduits selon la revendication 1 ou 2, caractérisés en ce que le costabilisant thermique est du stéarate de calcium et de magnésium couplé à un costabilisant organique.

4. Conduits selon l'une quelconque des revendications 1 à 3, caractérisés en ce que le costabilisant thermique est présent à raison de 0.05 à 5 %.

5. Conduits selon l'une quelconque des revendications 1 à 4, caractérisés en ce que la composition à base de polychlorure de vinyle comprend également un plastifiant.

6. Procédé pour l'obtention de conduits selon l'une quelconque des revendications 1 à 5, caractérisé en ce que l'on dépose la couche de protection sur le tuyau en cuivre par extrusion continue sans soudure.
